# EUROPÄISCHE PATENTSCHRIFT

(11) **EP 1 846 530 B1**
(45) Veröffentlichungstag und Bekanntmachung des Hinweises auf die Patenterteilung: **28.10.2009**
(21) Anmeldenummer: 06707964.0
(22) Anmeldetag: 01.02.2006
(51) Int. Cl.: C09J 133/08, C09J 7/02, C09J 7/04

(54) **HAFTKLEBSTOFFE FÜR BEDRUCKBARE PAPIERETIKETTEN**
CONTACT ADHESIVES FOR PRINTABLE PAPER LABELS
COLLE AUTO-ADHESIVE POUR ETIQUETTES EN PAPIER A IMPRIMER

(30) Priorität: 02.02.2005 DE 102005004925
(43) Veröffentlichungstag der Anmeldung: 24.10.2007
(73) Patentinhaber: BASF SE, 67056 Ludwigshafen (DE)
(72) Erfinder: CHOI, Nok-Young, 52134 Herzogenrath (DE); DIEHL, Heiko, 67136 Fussgönheim (DE); DRAGON, Andree, 67346 Speyer (DE); KIRSCH, Stefan, 55268 Nieder-Olm (DE)
(86) Internationale Anmeldenummer: PCT/EP2006/050603
(87) Internationale Veröffentlichungsnummer: WO 2006/082209

(56) Entgegenhaltungen:
- EP-A- 0 838 509
- EP-A- 1 102 108
- WO-A-00/36039
- US-A1- 2003 008 140

## Beschreibung

Die Erfindung betrifft Etiketten, die mit einem Haftklebstoff beschichtet sind, enthaltend ein durch, radikalische Polymerisation erhältliches Polymer, aufgebaut aus
a) 70 bis 99 Gew. % n-Butylacrylat
b) 1 bis 30 Gew. % Ethylhexylacrylat
c) 0 bis 5 Gew. % einer ethylenisch ungesättigten Säure
d) 0 bis 20 Gew. % mindestens eines weiteren Monomeres, wobei Vinylacetat als weiteres Monomer ausgeschlossen ist

Weiterhin betrifft die Erfindung selbstklebende Artikel, insbesondere bedruckbare Papier-Etiketten, welche mit dem Haftklebstoff beschichtet sind.

Haftklebstoffe bilden einen bleibenden klebrigen Film, der schon unter geringem Druck bei Raumtemperatur an den verschiedensten Oberflächen haftet (eng.: pressure sensitive adhesives (PSA)). Haftklebstoffe dienen zum Herstellen selbstklebender Erzeugnisse wie Selbstklebeetiketten, -bänder oder -folien. Derartige Produkte lassen sich sehr einfach anwenden und ermöglichen eine schnelles Arbeiten beim Verkleben. Die Qualität eines selbstklebenden Artikels hängt im wesentlichen davon ab, ob die innere Festigkeit (Kohäsion) und die Haftung eines Klebstofffilms auf der zu beklebenden Oberfläche (Adhäsion) entsprechend der jeweiligen Anwendung aufeinander abgestimmt sind.

Gewünscht sind insbesondere Haftklebstoffe, welche sich für unterschiedliche Verwendungen eignen.

Den Haftklebstoffen wird oft ein zusätzliches klebrigmachendes Harz (Tackifier) zugesetzt.

Der Haftklebstoff muss dann trotz Tackifier-Zusatz ein gutes Adhäsion/Kohäsion Verhältnis haben.

Viele Papier-Etiketten werden bedruckt. In Druckern, z.B. Laser-Druckern treten dabei hohe Temperaturen auf. Die Haftklebstoffe sollten daher nicht allzu fließfähig sein und insbesondere bei hohen Temperaturen ihre gute Kohäsion behalten, damit es nicht zu Kantenaustritt und Verschmutzungen im Drucker kommt. Für die anschließende Verklebung des bedruckten Etiketts bei Raumtemperatur sollte insbesondere die Adhäsion gut sein.

Insbesondere sollen die Haftklebstoffe auch geruchsfrei sein.

Vinylacetat enthaltende Polymere spalten insbesondere bei hohen Temperaturen Essigsäure ab, was zu Geruchsbelästigungen führt.

Aus EP-A 952 199 sind Haftklebstoffe bekannt, welche Polymere aus n-Butylacrylat und 2-Ethylhexylacrylat enthalten. N-Butylacrylat wird hier nur in untergeordneten Mengen eingesetzt.

WO 00/36039 beschreibt Haftklebstoffe, welche sich für Verwendungen bei hohen Temperaturen, z. B. für bedruckbare Etiketten eignen.

Aufgabe der vorliegenden Erfindung waren selbstklebende Artikel, die mit Haftklebstoffen beschichtet sind, welche die obigen Eigenschaften haben. Demgemäß werden die eingangs definierten Haftklebstoffe verwendet.

Die Haftklebstoffe enthalten als wesentlichen Bestandteil ein durch radikalische Polymerisation erhältliches Polymer aufgebaut aus:
a) 70 bis 99 Gew. % n-Butylacrylat
b) 1 bis 30 Gew. % Ethylhexylacrylat
c) 0 bis 5 Gew. % einer ethylenisch ungesättigten Säure
d) 0 bis 20 Gew. % mindestens eines weiteren Monomeres, wobei Vinylacetat als weiteres Monomer ausgeschlossen ist

Als Monomere c) kommen z. B. Monomere mit Carbonsäure-, Sulfonsäure- oder Phosphorsäuregruppen in Betracht. Bevorzugt sind Monomere mit Carbonsäuregruppen. Genannt seien z. B. Acrylsäure, Methacrylsäure, Itaconsäure, Maleinsäure oder Fumarsäure. Besonders bevorzugt ist Acrylsäure oder Methacrylsäure.

Weitere Monomere d) sind z. B. C₁-C₂₀-Alkyl(meth)acrylate (außer nBA und EHA), Vinylaromaten mit bis zu 20 C-Atomen, ethylenisch ungesättigten Nitrile, Vinylhalogenide, Vinylether von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. Methylmethacrylat, Methylacrylat oder Ethylacrylat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atomen enthaltenden Alkoholen.

Als Kohlenwasserstoffe mit 4 bis 8 C-Atomen und zwei olefinischen Doppelbindungen seien Butadien, Isopren und Chloropren genannt.

Weitere Monomere sind z. B. auch Hydroxylgruppen enthaltende Monomere, insbesondere C₁-C₁₀-Hydroxylalkyl(meth)acrylate, (Meth)acrylamid.

Als weitere Monomere seinen darüber hinaus Phenyloxyethylglykolmono-(meth-) acrylat, Glycidylacrylat, Glycidylmethacrylat, Amino-(meth-)acrylat wie 2-Aminoethyl-(meth) acrylat genannt.

Als weitere Monomere seien auch vernetzende Monomere genannt.

Vorzugsweise ist das Polymer aufgebaut aus
a) 75 bis 95 Gew. % n-Butylacrylat
b) 5 bis 25 Gew. % Ethylhexylacrylat
c) 0 bis 5 Gew. % einer ethylenisch ungesättigten Säure
d) 0 bis 5 Gew. % mindestens eines weiteren Monomeres, wobei Vinylacetat als weiteres Monomer ausgeschlossen ist.

Besonders bevorzugt ist das Polymer aufgebaut aus
a) 75 bis 94,5 Gew. % n-Butylacrylat
b) 5 bis 24,5 Gew. % Ethylhexylacrylat
c) 0,5 bis 5 Gew. % einer ethylenisch ungesättigten Säure
d) 0 bis 10 Gew. % mindestens eines weiteren Monomeres, wobei Vinylacetat als weiteres Monomer ausgeschlossen ist.

Ganz besonders bevorzugt ist das Polymer aufgebaut aus
a) 80 bis 89 Gew. % n-Butylacrylat
b) 10 bis 19 Gew. % Ethylhexylacrylat
c) 1 bis 2 Gew. % einer ethylenisch ungesättigten Säure
d) 0 bis 5 Gew. % mindestens eines weiteren Monomeres, wobei Vinylacetat als weiteres Monomer ausgeschlossen ist.

Die Herstellung der Polymere erfolgt in einer bevorzugten Ausführungsform durch Emulsionspolymerisation, es handelt sich daher um ein Emulsionspolymerisat.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 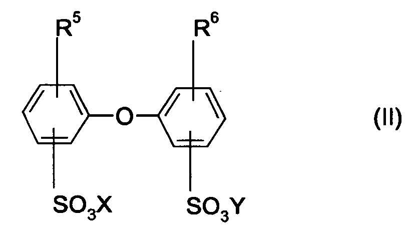 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax^{®} 2 A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten^{®} I-RA, Lumiten^{®} E 3065, Disponil^{®} FES 77, Lutensol^{®} AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate.

Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Monomeren werden im allgemeinen in Form von wässrigen Emulsionen zugegeben. Bei einer Verfahrensvariante werden bis zu 20, insbesondere bis zu 10 Gew.-% der Monomeren am Ende der Polymerisation nicht in Form einer Emulsion zugegeben (Quellungspolymerisation).

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.
Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt und die Dispersion nachpolymerisiert, d.h. noch einige Zeit bei der Polymerisationstemperatur gehalten.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymer wird vorzugsweise in Form seiner wässrigen Dispersion verwendet.

Der pH-Wert der Polymerdispersion wird vorzugsweise auf pH größer 4,5, insbesondere auf einen pH-Wert zwischen 5 und 8 eingestellt.

Die Glasübergangstemperatur des Polymeren, bzw. des Polymeren beträgt vorzugsweise -60 bis 0°C, besonders bevorzugt -60 bis -10°C und ganz besonders bevorzugt -60 bis -20°C.

Die Glasübergangstemperatur lässt sich nach üblichen Methoden wie Differentialthermoanalyse oder Differential Scanning Calorimetrie (s. z.B. ASTM 3418/82, sog. "midpoint temperature") bestimmen.

Die Haftklebstoffe können allein aus dem Polymeren bzw. der wässrigen Dispersion des Polymeren bestehen.

Die Haftklebstoffe können weitere Zusatzstoffe enthalten, z.B. Füllstoffe, Farbstoffe, Verlaufsmittel, Verdicker oder Tackifier (klebrigmachende Harze). Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Bevorzugt enthält der Haftklebstoff Tackifier, insbesondere Kolophoniumharze.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymer (fest/fest).

Vorzugsweise enthalten die Klebstoffe Verlaufsmittel (z. B. Lumiten) in Mengen von 0,05 bis 3 Gew.-Teilen auf 100 Gew.-Teile Polymer. Als Verlaufsmittel oder Benetzungsmittel kommen insbesondere sulfonierte Dicarbonsäureester in Betracht. Besonders bevorzugt sind Dialkylester der sulfonierten Bernsteinsäure, wie sie in EP 1 006 106 beschrieben sind. Benetzungsmittel sind oft bei Transferauftragsverfahren hilfreich, da bei diesen Verfahren zunächst silikoniertes Papier beschichtet wird, auf dem der Haftklebstoff nicht gut haftet. Anschließend erfolgt der Transfer auf das gewünschte Trägermaterial.

Insbesondere eignen sich die Haftklebstoffe zur Herstellung von selbstklebenden Artikeln, wie Etiketten.

Die selbstklebenden Artikel bestehen im allgemeinen aus einem Träger und einer ein- oder beidseitig, vorzugsweise einseitig aufgebrachten Schicht des Klebstoffs.

Bei dem Trägermaterial kann es sich z. B. um Papier oder um Kunststofffolien aus Polyolefinen oder PVC handeln. Bevorzugt ist Papier.

Zur Herstellung der Klebstoffschicht auf dem Trägermaterial kann das Trägermaterial in üblicher Weise, z.B. auch im Transferverfahren, beschichtet werden. Übliche Schichtdicken (nach Trocknung) sind z.B. 5 bis 30 g/m².

Die erhaltenen, beschichteten Substrate werden z.B. als Selbstklebeartikel, wie Etiketten verwendet. Bevorzugt sind insbesondere bedruckbare Etiketten.

Die Selbstklebeartikel, insbesondere Etiketten, können auch beliebige Substrate, insbesondere solche aus Polyolefinen, Papier oder Karton geklebt werden.

Die Haftklebstoffe haben mit und ohne Zusatz von Tackifiern eine gute Kohäsion und Adhäsion. Sie sind auch bei hohen Temperaturen geruchsfrei.

Die selbstklebenden Artikel eignen sich insbesondere für Verwendungen bei denen sie hohen Temperaturen von über 50°C, bzw. 80°C insbesondere über 100°C ausgesetzt sind, z.B. das Bedrucken von Etiketten, insbesondere mit einem Laserdrucker.

Beim Schneiden oder Stanzen von mit Haftkleber beschichteten Trägern, z. B. Etiketten, kommt es nicht oder kaum zu Kantenaustritt von Klebstoff. Auch bei hohen Temperaturen, wie sie z. B. beim Bedrucken von selbstklebenden Artikeln, insbesondere Etiketten in einem Laser-Printer auftreten, sind keine Verschmutzungen durch Kantenaustritt oder Fädenziehen des Klebstoffs zu beobachten.

Die Haftklebstoffe haben bei Raumtemperatur gute Adhäsion und Kohäsion, insbesondere auch auf unpolaren Oberflächen, bei hohen Temperaturen haben sie eine gute Kohäsion, wodurch Verschmutzungen und Kantenaustritt vermieden werden.

### Beispiele

### A) Herstellung der Polymerdispersionen

Die Herstellung der Polymeren erfolgte in einem 1 Liter Dreihalskolben mit Rückflusskühler unter Stickstoffatmosphäre.

83 g entionisiertes Wasser, 5,3 g einer 33 gew.-%igen Polystyrol-Saat und 50 g einer Initiator-Lösung (7 % Na-peroxodisulfat in Wasser) wurden auf 65°C erhitzt. Bei 80°C wurde eine Mischung von 4,67 g einer 15 %-igen wässrigen Ammoniak-Lösung und 10,5 g einer 10 %igen Lösung von Natriumhydroxymethylsulfonat (Rongalit®C) und 59 g entionisiertes Wasser über eine Dauer von 190 Minuten zugegeben.

10 Minuten nach Beginn der Zugabe der vorstehenden Mischung wurden die Monomeren in Form einer Emulsion (Emulgator Dowfax 2A1, 45 %-ig in Wasser) über den Zeitraum von 3 Stunden zugegeben. Danach wurden 42 g Styrol ohne Emulgator über 10 Minuten zugegeben und nach Zugabe von 2,8 g 25 %iger Ammoniak-Lösung die Dispersion weitere 15 Minuten bei 80°C gehalten (2. Stufe, Quellungspolymerisation).

Danach wurde noch eine chemische Desodrierung mit 14 g 10 %igen teritär Butylhydroperoxid, 0,175 g 4 %iger Diisolvine I 9,31 g 10 %iger Rongalit C-Lösung (80°C, 120 Minuten) durchgeführt. Nach Abkühlen auf Raumtemperatur betrug der Feststoffgehalt 61 Gew.-%, die mittlere Teilchengröße 300 nm; der pH-Wert lag zwischen 6 und 7.

**Table 1**

| Zusammensetzung in Gew.-Teile | | | | |
|---|---|---|---|---|
| | A1 | A2 | A3 | A4 |
| Wasser | 28,4 | 28,2 | 28,2 | 28,2 |
| Dowfax 2A1 | 1 | 1 | 1 | 1 |
| T-dodecylmercaptan | 0,05 | 0,05 | 0,05 | 0,05 |
| Acrylsäure | 1,5 | 1,5 | 1,5 | 1,5 |
| Ethylhexylacrylat | 0 | 10 | 20 | 40 |
| Butylacrylat | 92,5 | 82,5 | 72,5 | 52,5 |
| Styrol | 6 | 6 | 6 | 6 |

Die Gew.-Teile der Monomeren ergeben insgesamt 100.

### B) Herstellung der Haftklebstoff-formulierungen

Allen Polymeren A1 bis A4 und Acronal^{®} V215 wurden 20 Gew.-Teile Snowtack (ein Kolophoniumester) zugesetzt (20 Teile Snowtack, 80 Teile Polymer, fest).

Alle Formulierungen enthalten zusätzlich 1 Gew.-Teil Lumiten I-SC (Verlaufsmittel) auf 100 Gew.-Teile der Summe aus Polymer und Snowtack.

### C) Anwendungstechnische Prüfungen

### Schäl- und Scherfestigkeit

Papier (Herma-Papier 80 g/m²) wurde mit der Formulierung (18 g/m² trocken, Trocknung 3 Min., 90°C) beschichtet. (Transferverfahren)

Anschließend wurde die Schälfestigkeit (Adhäsion) und Scherfestigkeit (Kohäsion) bestimmt.

Der beschichtete Träger wurde in 25 mm breite Prüfstreifen geschnitten. Zur Bestimmung der Scherfestigkeit wurden die Prüfstreifen mit einer verklebten Fläche von 25 mm² auf ein V2A-Prüfblech geklebt, mit einer 1 kg schweren Rolle 1 mal angerollt, 10 min gelagert (im Normklima, 50 % rel. Luftfeuchtigkeit 1 bar, 23°C) und anschließend hängend mit einem 1 kg Gewicht belastet (im Normklima und alternativ bei 70°C). Das Maß für die Scherfestigkeit war die Zeit bis zum Abfallen des Gewichts; es wurde jeweils der Durchschnitt aus 3 Messungen berechnet.

Bei der Bestimmung der Schälfestigkeit (Adhäsion) wurde jeweils ein 2,5 cm breiter Prüfstreifen auf einen Prüfkörper aus Stahl geklebt und mit einer 1 kg schweren Rolle 1 mal angerollt. Er wurde nach 20 Minuten bzw. nach 24 Stunden Lagerung im Normklima mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfblech abgezogen und der dazu benötigte Kraftaufwand gemessen. Das Maß für die Schälfestigkeit war die Kraft in N/2,5 cm, die sich als Durchschnittswert aus fünf Messungen ergab. Die Prüfung erfolgte ebenfalls im Normklima.

### Schlingen-Prüfung (Loop Tack):

Aus dem Prüfstreifen wurde eine Schlinge geformt und die mit Klebstoff behaftete Seite mit einer Glasoberfläche in Kontakt gebracht. Danach wurde die zum Abziehen der Schlinge von der Glasoberfläche benötigte Maximalkraft (Abzugsgeschwindigkeit 300 mm/min) bestimmt.

### Mandrel-Test

Ein Prüfstab aus Glas mit kreisförmigem Querschnitt (Durchmesser 1 cm) wurde mit einem in der Länge passend geschnittenen Prüfstreifen umklebt. Nach einer Woche wurde geprüft, wie weit sich der Klebestreifen gelöst hat, d.h. die Verklebung aufgegangen ist. Angegeben wird die Gesamtlänge des Teils des Prüfstreifens, der nicht mehr am Glasstab haftet (in mm).

**Tabelle:**

| | Gew.-% EHA | Schälfestigkeft | | Schlingenwert | Kohäsion (Stunden) | | Mandrel |
|---|---|---|---|---|---|---|---|
| | | Stahl | Polyethylen | | 23°C | 70°C | |
| A1 | 0 | 22,1 | 15,7 | 9,9 | 12 | 1,5 | 1 |
| A2 | 10 | 20,9 | 17,4 | 9,5 | 18 | 1,3 | 1 |
| A3 | 20 | 22,3 | 18,8 | 9,4 | 21 | 0,9 | 2 |
| A4 | 40 | 19,7 | 12,6 | 10,5 | 9 | 0,5 | 5 |
| V215* | | 21,8 | 16,6 | 10,8 | 20 | 0,5 | 1 |

| | | | | | | | |
|---|---|---|---|---|---|---|---|
| *Acronal® V215, ein Polymer der BASF für Haftklebstoffe | | | | | | | |

## Patentansprüche

1. Selbstklebende Artikel, welche mit einem Haftklebstoff beschichtet sind, wobei es sich bei den Artikeln um Etiketten handelt und der Haftklebstoff ein durch radikalische Polymerisation erhältliches Polymer enthält, welches aufgebaut ist aus
a) 70 bis 99 Gew. % n-Butylacrylat
b) 1 bis 30 Gew. % Ethylhexylacrylat
c) 0 bis 5 Gew. % einer ethylenisch ungesättigten Säure
d) 0 bis 20 Gew. % mindestens eines weiteren Monomeres, wobei Vinylacetat als weiteres Monomer ausgeschlossen ist.

2. Artikel gemäß Anspruch 1, **dadurch gekennzeichnet, dass** das Polymer aufgebaut ist aus
a) 75 bis 95 Gew. % n-Butylacrylat
b) 5 bis 25 Gew. % Ethylhexylacrylat
c) 0 bis 5 Gew. % einer ethylenisch ungesättigten Säure
d) 0 bis 5 Gew. % mindestens eines weiteren Monomeres, wobei Vinylacetat als weiteres Monomer ausgeschlossen ist.

3. Artikel gemäß Anspruch 1 oder 2, **dadurch gekennzeichnet, dass** das Polymer aufgebaut ist aus
a) 75 bis 94,5 Gew. % n-Butylacrylat
b) 5 bis 24,5 Gew. % Ethylhexylacrylat
c) 0,5 bis 5 Gew. % einer ethylenisch ungesättigten Säure
d) 0 bis 10 Gew. % mindestens eines weiteren Monomeres, wobei Vinylacetat als weiteres Monomer ausgeschlossen ist.

4. Artikel gemäß einem der Ansprüche 1 bis 3, **dadurch gekennzeichnet, dass** das Polymer aufgebaut ist aus
a) 80 bis 89 Gew. % n-Butylacrylat
b) 10 bis 19 Gew. % Ethylhexylacrylat
c) 1 bis 2 Gew. % einer ethylenisch ungesättigten Säure
d) 0 bis 5 Gew. % mindestens eines weiteren Monomeres, wobei Vinylacetat als weiteres Monomer ausgeschlossen ist.

5. Artikel gemäß einem der Ansprüche 1 bis 4, **dadurch gekennzeichnet, dass** das Polymer ein Emulsionspolymerisat ist.

6. Selbstklebende Artikel gemäß einem der Ansprüche 1 bis 5, **dadurch gekennzeichnet**, das es sich um Etiketten aus Papier handelt.

7. Verfahren zum Bedrucken von selbstklebenden Artikeln mit einem Laser-Printer, **dadurch gekennzeichnet, dass** es sich um selbstklebende Artikel gemäß einem der Ansprüche 1 bis 6 handelt.

## Claims

1. A self-adhesive article coated with a pressure-sensitive adhesive, the article being label and the pressure-sensitive adhesive comprising a polymer obtainable by free-radical polymerization and synthesized from
a) 70% to 99% by weight of n-butyl acrylate
b) 1 % to 30% by weight of ethylhexyl acrylate
c) 0 to 5% by weight of an ethylenically unsaturated acid
d) 0 to 20% by weight of at least one further monomer, for which vinyl acetate is excluded.

2. The article according to claim 1, wherein the polymer is synthesized from
a) 75% to 95% by weight of n-butyl acrylate
b) 5% to 25% by weight of ethylhexyl acrylate
c) 0 to 5% by weight of an ethylenically unsaturated acid
d) 0 to 5% by weight of at least one further monomer, for which vinyl acetate is excluded.

3. The article according to claim 1 or 2, wherein the polymer is synthesized from
a) 75% to 94.5% by weight of n-butyl acrylate
b) 5% to 24.5% by weight of ethylhexyl acrylate
c) 0.5% to 5% by weight of an ethylenically unsaturated acid
d) 0 to 10% by weight of at least one further monomer, for which vinyl acetate is excluded.

4. The article according to any one of claims 1 to 3, wherein the polymer is synthesized from
a) 80% to 89% by weight of n-butyl acrylate
b) 10% to 19% by weight of ethylhexyl acrylate
c) 1 % to 2% by weight of an ethylenically unsaturated acid
d) 0 to 5% by weight of at least one further monomer, for which vinyl acetate is excluded.

5. The article according to any one of claims 1 to 4, wherein the polymer is an emulsion polymer.

6. The self-adhesive article according to any one of claims 1 to 5, which is a paper label.

7. A method of printing a self-adhesive article with a laser printer, said self-adhesive article being an article according to any one of claims 1 to 6.

## Revendications

1. Articles autoadhésifs, qui sont revêtus avec un autoadhésif, les articles consistant en des étiquettes et l'autoadhésif contenant un polymère pouvant être obtenu par polymérisation radicalaire, qui est constitué de
a) 70 à 99 % en poids d'acrylate de n-butyle
b) 1 à 30 % en poids d'acrylate d'éthylhexyle
c) 0 à 5 % en poids d'un acide à insaturation éthylénique
d) 0 à 20 % en poids d'au moins un autre monomère, l'acétate de vinyle étant exclu en tant qu'autre monomère.

2. Articles selon la revendication 1, **caractérisés en ce que** le polymère est constitué de
a) 75 à 95 % en poids d'acrylate de n-butyle
b) 5 à 25 % en poids d'acrylate d'éthylhexyle
c) 0 à 5 % en poids d'un acide à insaturation éthylénique
d) 0 à 5 % en poids d'au moins un autre monomère, l'acétate de vinyle étant exclu en tant qu'autre monomère.

3. Articles selon la revendication 1 ou 2, **caractérisés en ce que** le polymère est constitué de
a) 75 à 94,5 % en poids d'acrylate de n-butyle
b) 5 à 24,5 % en poids d'acrylate d'éthylhexyle
c) 0,5 à 5 % en poids d'un acide à insaturation éthylénique
d) 0 à 10 % en poids d'au moins un autre monomère, l'acétate de vinyle étant exclu en tant qu'autre monomère.

4. Articles selon l'une quelconque des revendications 1 à 3, **caractérisés en ce que** le polymère est constitué de
a) 80 à 89 % en poids d'acrylate de n-butyle
b) 10 à 19 % en poids d'acrylate d'éthylhexyle
c) 1 à 2 % en poids d'un acide à insaturation éthylénique
d) 0 à 5 % en poids d'au moins un autre monomère, l'acétate de vinyle étant exclu en tant qu'autre monomère.

5. Articles selon l'une quelconque des revendications 1 à 4, **caractérisés en ce que** le polymère est un produit de polymérisation en émulsion.

6. Articles autoadhésifs selon l'une quelconque des revendications 1 à 5, **caractérisés en ce qu'**il s'agit d'étiquettes en papier.

7. Procédé pour l'impression d'articles autoadhésifs avec une imprimante laser, **caractérisé en ce qu'**il s'agit d'articles autoadhésifs selon l'une quelconque des revendications 1 à 6.
